# EUROPEAN PATENT APPLICATION

(11) **EP 2 113 551 A1**
(43) Date of publication of application: **04.11.2009**
(21) Application number: 09447014.3
(22) Date of filing: 23.04.2009
(51) Int. Cl.: C09K 21/02, C08G 18/00, C08J 9/00, C08L 75/04

(54) **Method for manufacturing a fire-resistant foam.**

(30) Priority: 29.04.2008 BE 200800249
(71) Applicant: Maras, Monique Georgette H., 9120 Haasdonk (BE)
(72) Inventor: Maras, Monique Georgette H., 9120 Haasdonk (BE)
(74) Representative: Donné, Eddy

(57) **Abstract**

Method for the manufacture of a fire-resistant foam, whereby a polyol and a di-isocyanate are mixed together, **characterised in that** the aforementioned products are also mixed with sodium silicate, after this sodium silicate is heated to liquefy it enough to facilitate mixing it with the polyol and the di-isocyanate.

Fire-resistant foam, **characterised in that** the foam is manufactured based on a mixture of polyol with di-isocyanate, and liquid sodium silicate.

## Description

This invention relates to a method for manufacturing a fire-resistant foam.

It is common knowledge that a foam, like PU-foam (polyurethane) is built up from a copolymer with a hard and soft segment, such as a di-isocyanate and a polyol respectively.

To manufacture a PU foam, the polyol and di-isocyanate are mixed with each using a standard method, whereby the choice of the segments shall have an influence on the ultimate properties of the manufactured foam.

Foams of this type are not fire retardant or fire-resistant and in the event of a fire they cause significant smoke formation with dissipation of toxic gasses.

The purpose of this invention is to provide a solution for one or more of the aforementioned disadvantages and/or other disadvantages, as it provides a method for the manufacture of a fire-resistant foam, whereby a polyol and a di-isocyanate are mixed together, and whereby sodium silicate is also added in addition to the aforementioned products, after this sodium silicate has been heated enough to increase liquefy it, therefore facilitating mixing it with the polyol and the di-isocyanate.

By liquefying the sodium silicate, this product can be mixed with the aforementioned basic products to form a foam.

An advantage is that, through the addition of sodium silicate, the foam becomes exceptionally fire retardant and resistant and that little or no flue gasses are released in the event of a fire.

In line with a preferred characteristic, up to 5 times more sodium silicate is added in weight to the total quantity of polyol and di-isocyanate, which generates exceptionally good results in the field of fire resistance.

In line with a preferred characteristic of the invention, the method contains the additional step of adding graphite to the mixture.

An advantage is that, in the event of fire, the graphite forms a crust on the foam and in doing so also brings about an additional fire retardant effect.

Another example is that graphite is resistant to extremely high temperatures.

This invention also relates to a fire retardant foam, whereby the foam is manufactured based on a mixture of a polyol with a di-isocyanate, and liquid sodium silicate.

The use of the aforementioned foam results in the advantages described in the foregoing.

With the intention of providing an improved demonstration of the characteristics of the invention, an example is given below, without any restrictive character whatsoever, with reference to the corresponding figures, of a preferred execution form for the manufacture of a fire-resistant foam in accordance with the invention, in which:
figure 1 schematically represents a system for the application of a method according to the invention;
figure 2 shows a variant of figure 1.

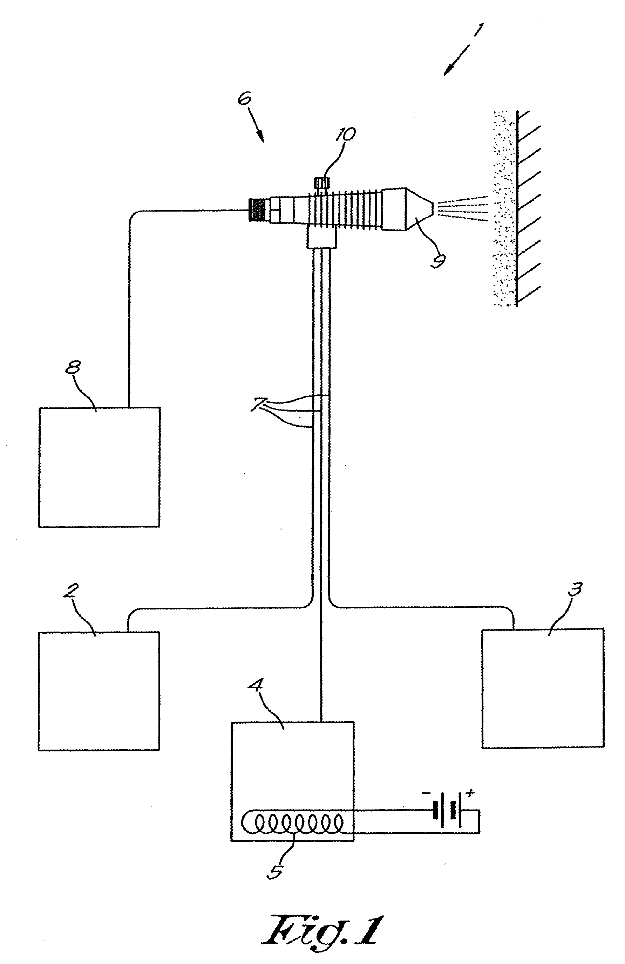

The system shown in figure 1 for spraying a foam, for example in the frames of a window or a door, mainly comprises three reservoirs 2-4 in which the basic products are stored, in particular a reservoir 2 for polyol; a reservoir 3 for di-isocyanate and a reservoir 4 for sodium silicate.

The sodium silicate reservoir used for supply initially has a thick, viscous consistency at room temperature, and preferably a solid substance percentage between 48% and 60%, and if at all possible a solid substance percentage of 53.5%.

The reservoir 4 for sodium silicate is also fitted with a heating element 5, which facilitates heating the sodium silicate in such a way that it liquefies and can be mixed with the polyol and the di-isocyanate.

The system 1 is also fitted with a spraying device 6, for example in the form of a spray gun, which is connected using hoses 7 to each of the aforementioned reservoirs 2-4, and that is connected to a compressed air unit 8 in the standard manner.

The spray gun 6 is fitted with a spray head 9 and control 10 which facilitates combining the three aforementioned products in the desired quantities in propellant form.

The method that is used according to the invention for the manufacture of a fire-resistant foam is straightforward and as follows.

Prior to mixing the sodium silicate with the aforementioned products, in the method according to the invention the sodium silicate is heated, in such a way that it transforms from a thick, syrupy phase into a more liquid phase.

In line with a preferred characteristic of the invention, the sodium silicate is heated to a temperature between 25°C and 50°C, if at all possible between 35°C and 45°C, which causes the sodium silicate to liquefy enough to use it as a propellant.

The three aforementioned products can each be supplied individually from the mixing heat and spray head 9, as shown in the system in figure 1.

When the sodium silicate has reached the desired temperature, the three products must be sprayed together in suitable quantities, in such a way that the mixture of these products results in the formation of a foam which is based on a polyol, a di-isocyanate and sodium silicate, which is also fire resistant.

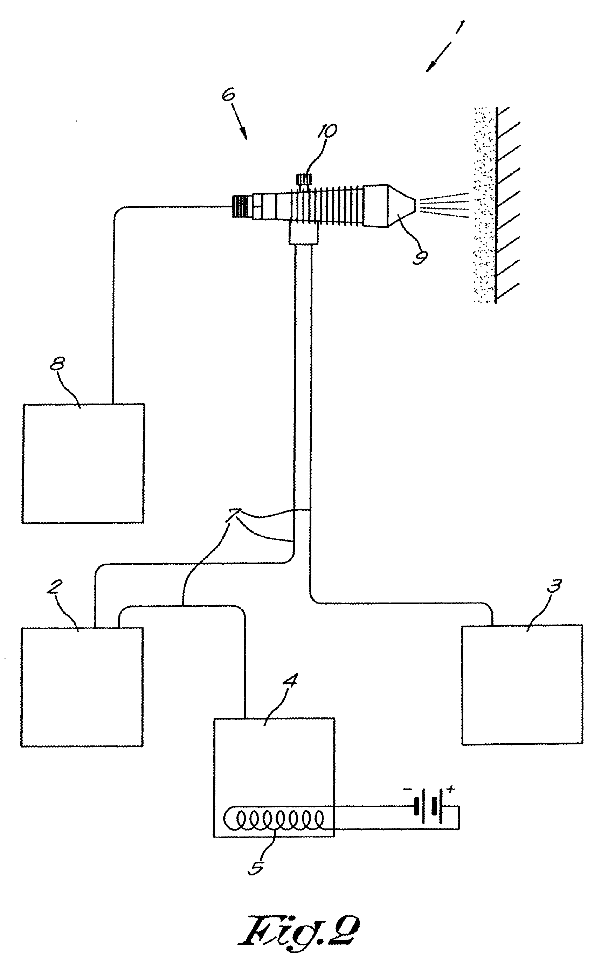

The liquid sodium silicate can also be mixed with the polyol in advance, as schematically demonstrated in figure 2, after which, this polyol-sodium silicate mixture and the di-isocyanate are each individually supplied to the mixing and spraying head 9.

In an alternative execution form of the method, the di-isocyanate can be mixed with the sodium silicate, after which this di-isocyanate sodium silicate mixture and the polyol are each individually supplied to the mixing and spraying head 9.

In the method for the manufacture of a foam, the polyol and the di-isocyanate can be mixed in a weight ratio between 1/1 and 1/1.5.

The preferred quantity of sodium silicate is at least 100 grams per kilogram polyol and di-isocyanate together, but the greater the quantities of sodium silicate, the better for the fire-resistant properties of the foam. By applying the method according to the invention, up to 5 kilograms of sodium silicate can be added per kilogram polyol and di-isocyanate together, resulting in the manufacture of foam with a density between 80 and 500 kg/m³, which was only possible with a density up to 40 or 50 kg/m³ until now.

Subject to the application and the desired fire retardant properties, a suitable mixture will be used.

In a practical execution form, a larger quantity of sodium silicate can be added, for example 2 kilograms per kilogram of polyol and di-isocyanate.

In a preferred execution form of the method, additional graphite can be added.

It is self-evident that the ratios and quantities of products in the mixtures defined in the foregoing are merely for illustrative purposes and this invention is by no means restricted to these.

This invention is by no means restricted to the method described by way of example, or a method for the manufacture of fire-resistant foam and a foam according to the invention can be achieved according to numerous variants without exceeding the scope of the invention.

## Claims

1. Method for the manufacture of a fire-resistant foam, whereby a polyol and a di-isocyanate are mixed together, **characterised in that** the aforementioned products are also mixed with sodium silicate, after this sodium silicate is heated to liquefy it enough to facilitate mixing it with the polyol and the di-isocyanate.

2. Method according to claim 1, **characterised in that** the sodium silicate is heated to a temperature between 25°C en 50°C, if at all possible between 35°C and 45°C.

3. Method according to claim 1 or 2,
**characterised in that** the fire-resistant foam is manufactured by using a mixing and spray head to mix the three aforementioned products under pressure.

4. Method according to claim 3, **characterised in that** each of the three aforementioned products are individually supplied to the mixing and spraying head.

5. Method according to one of the claims 3 or 4, **characterised in that** the sodium silicate with the polyol or the di-isocyanate is added beforehand, after which the mixed product and the residual product are each individually supplied to the mixing and spraying head.

6. Method according to one of the previous claims, **characterised in that** the weight mixing ratio is between 1/1 and 1/1.5 for the polyol and the di-isocyanate.

7. Method according to one of the previous claims, **characterised in that** the quantity of sodium silicate is at least 100 grams per kilogram polyol and di-isocyanate together, preferably even up to 10 kilograms per kilogram polyol and di-isocyanate together.

8. Method according to claim 7, **characterised in that** the quantity of sodium silicate is at least 3 kilograms to 5 kilograms per kilogram polyol and di-isocyanate together, preferably more, even up to 5 kilograms per kilogram polyol and di-isocyanate together.

9. Method according to one of the preceding claims, **characterised in that** extra additional graphite is added.

10. Fire-resistant foam, **characterised in that** the foam is manufactured based on a mixture of polyol with di-isocyanate, and liquid sodium silicate.

11. Fire-resistant foam, according to claim 10, **characterised in that** the quantity of sodium silicate added is as such that a foam is formed with a density between 80 and 500 kg/m3, if at all possible between 300 and 500 kg/m3.
